Europäisches Patentamt

European Patent Office

Office européen des brevets

(11) Publication number: **0 137 731**
**A2**

# (12) EUROPEAN PATENT APPLICATION

(21) Application number: **84306174.8**

(22) Date of filing: **10.09.84**

(51) Int. Cl.⁴: **F 25 B 49/00**
**B 60 H 1/32**

(30) Priority: **28.09.83 US 536922**

(43) Date of publication of application:
**17.04.85 Bulletin 85/16**

(84) Designated Contracting States:
**DE FR GB IT**

(71) Applicant: **BORG-WARNER CORPORATION**
**200 South Michigan Avenue**
**Chicago Illinois 60604(US)**

(72) Inventor: **Tothero, Dwight L.**
**4751, Barberry Court**
**Decatur Illinois 62526(US)**

(74) Representative: **Williams, Trevor John et al,**
**J.A. KEMP & CO. 14 South Square Gray's Inn**
**London WC1R 5EU(GB)**

(54) **Method and system of control for a cluthless variable displacement cooling system.**

(57) A control system (11) for a continuously driven variable, displacement compressor (12) particularly useful in an automotive environment is shown. The control circuit controls fluid flow through a cooling or heating circuit (10) to prevent evaporator (26) freeze-up at low ambient temperatures, and does not require a clutch to control the compressor (12). Instead a valve (12) is used to regulate fluid flow and prevent freeze-up.

Fig.1.

METHOD AND SYSTEM OF CONTROL FOR A CLUTCHLESS
VARIABLE DISPLACEMENT COOLING SYSTEM

## Description

This invention relates generally to a system for controlling the fluid flow through a refrigeration or air conditioning system in an automobile. More specifically, this disclosure teaches a method and system for control of a variable displacement compressor in an automobile. The compressor is continuously driven and does not need a clutch. Under low ambient temperature such an air conditioning system would be susceptible to evaporator freeze up.

Control systems for automotive air conditioning apparatus are abundant in the art. Further, there are devices that are actuated by temperature, pressure or other operating conditions. The actuating devices include flow control valves, thermal bulbs, and electrical control circuits. The prior art discloses various means of control for circuits or, more specifically, fluid cooling circuits. These control means include throttling valves, expansion valves, pressure operable devices, solenoid operated devices, capacity controls, zero stroke control and other means. The valve assemblies include circuits controlled by electronics sensitive to pressure, temperature, engine speeds or other operating conditions in an automotive environment. These control means, or at least several of them, are operable in an analogous fashion to a parallel circuit, that is, they serve as a shunt to bypass or divert fluid flow or line pressure in a refrigerant or fluid circuit.

A known device operable to override a thermal expansion valve and divert or inhibit flow through such a thermal expansion valve is disclosed in U. S. Patent No. 2,579,034 (Dube et al.). In this device a thermal bulb 43 is generally positioned near an evaporator to detect thermal changes in the surrounding environment. This bulb is coupled to a remote control mechanism with a fluid expansion means and this assembly is connected to a bellows and pressure plate beneath the pintle valve of a thermal expansion valve. This device, responsive to temperature at thermal bulb 43, expands or contracts to move the pressure plate against valve 13 to seal flow through the line. However, it was recognized within this disclosure that, although simplistic in form, it is severely limited in operation as it is incapable of use over either a wide temperature or pressure range as it is or must provide all the fluid power through a bellows 32.

U. S. Patent No. 3,486,693 (Stang, Jr. et al.) teaches a gas flow control system utilizing solid-state devices to modulate the flow of gas to a furnace. More specifically, a dual valve arrangement 12 and 14 in a gas line is taught, where valves are controlled by a control circuit 16. Valve 12 is a modulating valve and valve 14 is a main valve, both valves are controlled by control circuit 16. There is no indication that valves 12 and 14 are operable in a closed, series circuit. The bypass valve 10 to regulate the quantity of coolant required in an evaporator 2 is disclosed. Bypass valve 10 is controlled by an electronic controller 6. This controller 6 is responsive to a temperature sensor 14 measuring the cooling space temperature and/or a timing device 13. This device is essentially a shunt arrangement and is not a series connection of the fluid circuit.

U. S. Patent No. 3,609,989 (Richardson) teaches a control circuit for a refrigeration system within a centrifugal compressor. In this control circuit there is a capacity control unit or vane 41 which is operable by a sliding piston or cylinder 43. The piston 43 is controlled or operated by cylinder portions 44 and 45 subjected to fluid under pressure. The control fluid or fluid pressure introduced to cylinder portions 44 and 45 is through solenoid operated valves Va and Vb. These valves serve to control fluid flow to piston 43 which operates vane control means 41. There is no teaching of a single valve to prohibit fluid flow through the series circuit of the refrigeration system.

Generally speaking, an air conditioning system for an automobile includes a compressor with a clutch assembly, driven or operated from an engine or motor. This clutch may be operable by centrifugal or electromagnetic means for engagement. Such a clutch and the control circuit associated therewith to control an air conditioning system is taught in U S. Patent No. 3,667,245 (Till et al.). This use of a clutch is obviated in the present invention.

U. S. Patent No. 3,688,517 (Newton) discloses a valve 18 between an evaporator and a compressor. This patent also discloses a standard thermal expansion valve 14 operable between the condenser 12 and evaporator 16 of an automotive air conditioning system. Further, operable between the compressor 10 and the evaporator 16 is a control valve 18 which is responsive to changes in the superheat condition of the refrigerant flow to the compressor, that is, the temperature of the gas downstream of the evaporator and further, downstream of the valve in chamber 37 of valve 18. This device is operable on the low pressure or suction side of the compressor.

U.S. Patent No. 3,698,204 (Shlotterbeck et al.) teaches a similar system but is responsive to a control module 215 to control the suction throttling valve operable between the evaporator and the compressor.

U. S. Patent No. 3,803,865 (Newton) teaches a refrigeration control system responsive to manifold vacuum from an engine communicating to a control valve which operates between the evaporator and compressor suction port. The evaporator pressure is controlled after the monitored or cooled space has had enough time to reach a normal or normalized temperature.

U. S. Patent No. 3,861,829 (Roberts et al.) teaches a variable displacement compressor and a capacity control circuit for varying the position of the wobble plate of such compressor. However, this control circuit is operable between crankcase pressure and suction line pressure and is not an integral element of the fluid circuit.

U. S. Patent No. 4,037,993 (Roberts) teaches the use of a control valve, more specifically, a spool valve with a bellows control to position the wobble plate by a balancing of the differential in pressure between suction line and crankcase pressures. Bellows valve G provides communication to chamber 170 to shift the hinge ball of such wobble plate by use of a spool valve to communicate discharge or suction pressure to the chamber 170. Bellows valve G is responsive to the changes in suction pressure as the load on the wobble plate increases or decreases as a function of temperature variations or as a function of changes in a measured operating parameter such as the temperature in an automotive compartment.

A control valve arrangement for or utilized with a control displacement compressor is illustrated in U S. Patent Nos. 4,102,150 and 4,112,703 both to Kountz. In these disclosures a control valve 21 is shown in parallel with control displacement compressor 10, which valve 21 effectively operates as a shunt to provide control of fluid flow to the compressor. The control valve is located past the evaporator and is indicative of the use of such a valve on the suction side of the compressor.

Similarly, in U. S. Patent No. 4,083,197 (Boehmer) a shuttle valve is disclosed which is operable to shunt fluid flow or gas pressure flow as a function of the pressure differential between crankcase and suction line pressures.

In U. S. Patent No. 4,103,506 (Adalbert et al.) a control circuit for a sliding vane compressor is taught wherein a switch is interposed between the condenser and the evaporator to control or actuate an electromagnet which in turn controls the vane or vane position of the compressor.

It is desirable to provide a system or method to control a controlled displacement or variable displacement compressor which is not equipped with a clutch for intermittent operation. Control of a clutchless compressor requires a means or method to control the fluid flow therethrough. The controlled displacement compressors do not go to a zero-stroke condition, as it would be very difficult to thereafter restart such a compressor. In an automotive application this type of clutchless compressor usually would be continuously driven through a v-belt and pulley arrangement. As the compressor must always operate at a stroke greater than zero a small, though significant, volume of coolant would be continuously provided through the cooling circuit. This coolant causes the evaporator of the cooling circuit to freeze up at lower ambient temperatures. Therefore, it is incumbent upon the manufacturer and users of such compressors and air conditioning systems to provide for the prohibition of such coolant flow during shutdown of the cooling system. It is desired to allow the clutchless compressor to operate at the minimum stroke condition while also inhibiting fluid flow through the evaporator in the off cycle of the compressor and cooling system. The earlier attempts to control such cooling systems generally provided for shunting or diverting the fluid around the coolant flow circuit by frequently utilizing the differential in pressures between suction and crankcase or suction and discharge pressure. However, none of the earlier attempts to control fluid flow through the circuit provided the in-line control between the condenser and evaporator of the circuit disclosed herein.

The invention encompasses a control system for an automotive air or space conditioner having a clutchless variable or controlled displacement compressor with a condenser and liquid receiver, an expansion device, and an evaporator, all connected in a closed series circuit. Interposed between or ahead of the expansion device is a valve means to seal or close fluid flow through the fluid circuit of such air conditioning apparatus. The fluid flow through such a circuit may be uninhibited when such valve means is open, but at the closure of such valve fluid flow is prohibited and liquid is retained or maintained in the liquid receiver. The receiver may be included within the condenser in some cases. The valve means may be connected or controlled such that at the down time or inoperative time of the automotive vehicle the control valve will open. A time delay switch in the circuit permits the compressor to cycle normally for a short period (approximately ten seconds) anytime the compressor drive means is initially engaged to thereby flow a small amount of lubricant through the compressor, as it always starts in a partial stroke condition. Thus, the operation of the continuously running compressor, which has no clutch and which is restrained from going to a zero-stroke condition, is accommodated while providing a means to close fluid flow of such air conditioning system at ambient temperatures below which the evaporator would freeze up.

In the figures of the drawing like reference numerals identify like components and in the drawing:

FIG. 1 is a block diagram of an air conditioning circuit utilizing a clutchless controlled displacement compressor; and,

FIG. 2 is a schematic illustration of a controlled displacement compressor and air conditioning circuit utilizing an electromagnetically controlled valve and further disclosing a control circuit or actuating circuit for such valve.

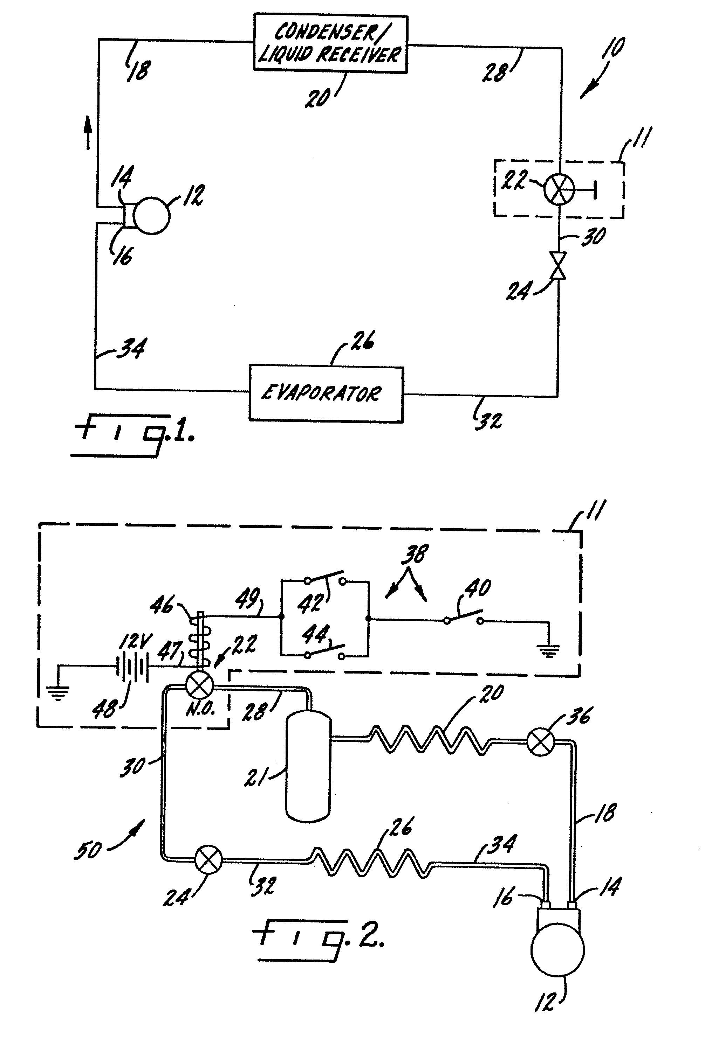

The elements of the present control system 11 for an automotive space conditioning apparatus of the type including a clutchless variable capacity compressor are illustrted at FIG. 1. The fluid circuit 10 of the air conditioner includes in series: a variable or controlled displacement capacity compressor 12 having a discharge port 14 and suction port 16; a conduit 18; a condenser 20; a conduit 28; a shut-off valve 22; a conduit 30; an expansion or thermal expansion device (TVX) 24; a conduit 32; an evaporator 26; and, a conduit 34. This closed loop or sequential circuit of such an air conditioning system 10 is indicative of the fluid flow through such a circuit, which fluid flow is known as a closed loop environment.

In such a fluid circuit the compressor 12 provides a fluid at an elevated pressure to be communicated through discharge port 14 and conduit 18 to condenser 20. This high pressure fluid is then communicated through conduit 28, valve 22, and conduit 30 to TVX 24 to reduce the pressure before communication to evaporator 26. Air is passed over evaporator 26 for cooling in an air conditioning apparatus for an automotive application. The system fluid changes state from liquid to vapor through evaporator 26 as a means to cool the air passed over evaporator 26. The line pressure is a function of air flow past the condenser, and the pressure ratio (suction pressure to discharge pressure) is limited by the volume above the compressor pistons. In this closed circuit compressor 12 is or may be driven by an external means, such as an automotive engine, through a v-belt and pulley arrangement (not shown) coupled thereto.

In the system of the present invention compressor 12 is not provided with a clutch, as is common in the prior art, to disengage such a compressor for intermittent operation. Fluid is compressed in compressor 12 and discharged through discharge port 14 and conduit means 18 to a condenser 20. The compressed fluid is transferred through a shut-off valve means 22, illustrated as a manual shut-off valve, to an expansion device 24. Expansion device 24 reduces the pressure of the compressed fluid prior to its introduction to evaporator 26. The pressure drop across expansion device 24 allows for controlled fluid flow to evaporator 26. The fluid passing through evaporator 26 expands and such fluid expansion, as known in the art, cools the surrounding air passing over or through evaporator 26. The expanded fluid, generally a gas, is communicated through conduit means 34 to the suction port 16 of compressor 12 to be compressed and then discharged through discharge port 14. This expansion-compression cycle provides the cooling effect in the closed loop environment of the air conditioning apparatus.

Particularly in accordance with the present invention, the introduction of shut-off valve 22 into the series circuit makes it possible to utilize a clutchless compressor. This valve means 22 is in series in the circuit 10 and provides a means to completely stop fluid flow through circuit 10. More particularly, valve 22 is the means that allows the compressor to continue to run without a clutch but which no longer allows fluid flow through the compressor. When valve 22 closes suction pressure at suction port 16 goes below a control point pressure, which is sensed by a bellows stroke control valve (not shown) and the compressor goes quickly to minimim stroke. The condenser/liquid receiver arrangement 20 along with the conduit means 18 and 28, thereafter retains the compressed liquid, if any, in the circuit. The compressor 12, in this case a variable displacement compressor, is continually rotated. As compressor 12 is not permitted to go to a zero-stroke condition, it will continually produce a compressive stroke, but a very small stroke. Without a shut-off valve 22 this very small stroke at ambient conditions below a certain temperature, generally in the range of about 40 F, produces a condition known as freeze-up of evaporator 26. That is, the fluid in the environment condenses and freezes on the evaporator 26 and inhibits the flow of air to the vehicle in which heating or air conditioning circuit 10 is mounted. The use of shut-off valve 22 prohibits fluid flow thrugh the expansion device 22 and evaporator 26, thus freeze-up of evaporator 26 is prevented.

In a preferred embodiment as shown in FIG. 2, a solenoid operated valve as shut-off valve 22 is provided. This solenoid operated valve 22 is coupled to a source of energy such as a 12 volt energy source or battery, and to a series of switches. Further illustrated in the closed loop arrangement 50 in FIG. 2 is an individual liquid receiver 21 and a pressure relief valve 36 interposed in conduit 18 between condenser 20 and discharge port 14. The series of switches or electrical switching circuit 38, for example, includes a time-delay switch 40 mounted in an automotive space, and connected in series with a pair of parallel-connected switches, a thermally operable switch 42 and a manual switch 44. The terminal of switch 40 remote from parallel switches 42, 44 is connected to ground. Solenoid valve 22 includes an electromagnetic winding 46, to one end of which a battery or an energizing source 48 is coupled through a conductor 47. Winding 46 is connected to parallel switches 42, 44 through a conduit 49 to provide a closed electrical circuit.

Valve 22 in FIG. 2 is electrically operable to close and seal the fluid control circuit 10 against fluid flow, in the same manner s shut-off valve 22 in FIG. 1. Valve 22 is normally open, electromagnetically operable valve. Current flows through the winding 46 of valve 22 when either of switches 42 or 44 is closed, and when switch 40, the time-delay switch which may be connected to the ignition switch in an automobile, is simultaneously closed. Valve 22, being normally open, thereafter closes and seals fluid flow through such fluid circuits described in FIG. 1. Switch 42 may be thermally actuated by a device such as a bimetal strip or other device known in the art to close at or below a given temperature, and similarly may be open above this given temperature. Switch 44 is shown as a manual switch operable to close the circuit of valve means 22. In this closed circuit condition, current flows through winding 46 to actuate and close normally open valve 22. Closure of valve 22 prohibits fluid flow through the cooling circuit 10 to inhibit freeze-uyp of evaporator 26.

Therefore, the present control circuit 10 allows the use of a clutchless compressor which cannot go to a zero-stroke condition to prohibit fluid flow. It eliminates the clutch which otherwise would provide intermittent operation of such a compressor 12. This circuit 10 permits some flow to provide for lubrication of compressor 12 when the automobile or automotive device is inoperative, by utilizing switches 40, 42 and 44 in the energizing circuit for valve 22. The lubricant is normally retained in the crankcase of compressor 12 and is transferred throughout the cooling system with the coolant flow. Either the manual or electrically operable valve 22 prohibits evaporator freeze-up while allowing the circuit 10 and functional part of such circuit 10 to be available for ready operation.

Those skilled in the art will recognize that certain variations can be made in the illustrated embodiments. Although only specific embodiments of the invention have been described and shown, it is apparent that various alternatives and modifications can be made therein. It is, therefore, the intention in the appended claims to cover all such modifications and altenatives as may fall within the true scope of the invention.

## CLAIMS

1. A control system (11) for an automotive space conditioning apparatus of the type including a clutchless variable capacity compressor (12), a condenser (20), a liqiuid receiver (21), an expansion device (24) and an evaporator (26), all connected in a closed, series circuit (10), characterized by valve means (22), connected in series between said liquid receiver (21) and said expansion device (24), and operable to prevent flow through said closed, series circuit (10).

2. A control system (11) as claimed in Claim 1, wherein said valve means (22) is a manually operable valve.

3. A control system (11) as claimed in Claim 1, wherein said valve means (20) is an electromagnetically operable valve.

4. A control system (11) as claimed in Claim 3, wherein said electromagnetically operable valve (22) is normally open.

5. A control system (11) as claimed in Claim 3, wherein said electromagnetically operable valve (22) is coupled to an electrical switching circuit (38) having both series and parallel connected switch means (40,42, 44) to activate said valve (22).

6. A control system (11) as claimed in Claim 5, wherein said parallel connected switches (42,44) include a manually operable switch (44) and a temperature dependent switch (42), and the series switch (40) is a time-delay switch (40), to provide power to the normally open electromagnetic valve (22).

7. A control system (11) as claimed in Claim 6, wherein the automotive space includes an energizing means (48), and the electromagnetic valve (22) includes a winding (46) which is coupled in series with said energizing means (48), time-delay switch (40) and the parallel-connected combination of the manuallly operable and temperature dependent switches (42,44).

8. A control system (11) for an automotive space conditioning apparatus of the type including a clutchless variable capacity compressor (12), a condenser (20), a liquid receiver (21), an expansion device (24) and an evaporator (26), all connected in a closed, series fluid circuit;

a normally-open electromagnetically operable valve means (22), coupled to an electrical switching circuit (38) having both series and parallel connected switches (40,42,44) to activate said valve means (22),

said parallel connected switches (42,44) including a manually operable switch (42) and a temperature dependent switch (44), and said series connected switch (40) being a time-delay switch (40),

wherein said electromagnetically operable valve means (22), connected in series between said liquid receiver and said expansion device (24), is operable to prevent fluid flow through said closed, series fluid circuit (10) when said series connected switch (40) and at least one of said parallel connected switches (42,44) are closed.

0137731

CONDENSER/
LIQUID RECEIVER

18  20  28  10

14  12  22  11

16  30

24

34  26

EVAPORATOR  32

Fig.1.

11

38

46  49  42  40

12V  47  22  44

48  N.O.  28  20  36

30  21  18

50  26

24  32  34  14

16

12

Fig.2.